(19) Europäisches Patentamt
European Patent Office
Office européen des brevets

(11) **EP 4 521 670 A1**

(12) **EUROPEAN PATENT APPLICATION**
published in accordance with Art. 153(4) EPC

(43) Date of publication:
**12.03.2025 Bulletin 2025/11**

(21) Application number: **23806846.4**

(22) Date of filing: **12.05.2023**

(51) International Patent Classification (IPC):
*H04L 5/00* (2006.01)

(52) Cooperative Patent Classification (CPC):
H04L 5/00

(86) International application number:
**PCT/CN2023/093903**

(87) International publication number:
**WO 2023/221894 (23.11.2023 Gazette 2023/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.05.2022 CN 202210554234**

(71) Applicant: **Huawei Technologies Co., Ltd.
Shenzhen, Guangdong 518129 (CN)**

(72) Inventors:
• **LIU, Yong**
**Shenzhen, Guangdong 518129 (CN)**
• **BI, Xiaoyan**
**Shenzhen, Guangdong 518129 (CN)**
• **LIU, Lei**
**Shenzhen, Guangdong 518129 (CN)**
• **DONG, Lei**
**Shenzhen, Guangdong 518129 (CN)**
• **JIANG, Chenglong**
**Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND APPARATUS**

(57) This application relates to the field of communication technologies, and discloses a communication method and apparatus. The method includes: A terminal device receives first indication information from a network device, where the first indication information indicates M ports, the M ports belong to N port groups, the N port groups are in one-to-one correspondence with N groups of first communication parameters, and both M and N are integers greater than 1. Further, the terminal device may communicate with the network device based on the N groups of first communication parameters. According to this method, because the N port groups are in one-to-one correspondence with the N groups of first communication parameters, the terminal device may use different first communication parameters for different port groups, to ensure normal communication between the network device and the terminal device.

FIG. 3

**Description**

**CROSS-REFERENCE TO RELATED APPLICATION**

This application claims priority to Chinese Patent Application No. 202210554234.5, filed with the China National Intellectual Property Administration on May 19, 2022 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

A demodulation reference signal (demodulation reference signal, DMRS) may be for estimating an equivalent channel of a data channel or a control channel. The data channel may be, for example, a physical uplink shared channel (physical uplink shared channel, PUSCH) or a physical downlink shared channel (physical downlink shared channel, PDSCH), and the control channel may be, for example, a physical downlink control channel (physical downlink control channel, PDCCH).

In a multiple input multiple output (multiple input multiple output, MIMO) technology, in an example of downlink data transmission, when sending data to a terminal device through the PDSCH, a network device may precode the data based on downlink channel state information (channel state information, CSI). Further, the network device may allocate a plurality of DMRS ports to the terminal device, and send DMRSs to the terminal device through the PDSCH on time-frequency resources corresponding to the plurality of DMRS ports. Signal processing such as precoding the same as that on the data is usually performed on the DMRSs. In this way, after receiving the DMRSs corresponding to the plurality of DMRS ports, the terminal device may obtain estimation for the equivalent channel by using a channel estimation algorithm, and then may complete data detection based on the equivalent channel.

However, after a massive multiple input multiple output (massive multiple input multiple output, Massive MIMO) technology is introduced, how the network device communicates with the terminal device still needs to be further researched.

**SUMMARY**

This application provides a communication method and apparatus, to implement communication between a network device and a terminal device based on communication parameters respectively corresponding to a plurality of port groups, and ensure normal communication between the network device and the terminal device.

According to a first aspect, an embodiment of this application provides a communication method. The method may be applied to a terminal device or a module (for example, a chip) in the terminal device. For example, the method is applied to the terminal device. In the method, the terminal device may receive first indication information from a network device, where the first indication information indicates M ports, the M ports belong to N port groups, the N port groups are in one-to-one correspondence with N groups of first communication parameters, and both M and N are integers greater than 1; and communicate with the network device based on the N groups of first communication parameters.

The first communication parameter herein may be a parameter on a terminal device side, namely, a parameter used when the terminal device communicates with the network device. For example, the first communication parameter may be a receiving parameter. In this case, the terminal device may receive a transmission channel (for example, a PDSCH) from the network device based on the N groups of first communication parameters. For another example, the first communication parameter may be a sending parameter. In this case, the terminal device may send a transmission channel (for example, a PUSCH) to the network device based on the N groups of first communication parameters.

According to the foregoing method, because the N port groups are in one-to-one correspondence with the N groups of first communication parameters, the terminal device may use different first communication parameters for different port groups, to effectively avoid a problem that a bit error rate at a receiving end is high because a same solution is used for a plurality of ports, and ensure normal communication between the network device and the terminal device.

In a possible design, the method further includes: determining the N groups of first communication parameters based on the N port groups and a correspondence between the port groups and the first communication parameters; or receiving second indication information from the network device, where the second indication information indicates the N groups of first communication parameters. In this way, the network device may indicate the N groups of first communication parameters to the terminal device via the second indication information, so that processing load of the terminal device can be effectively reduced.

In a possible design, the correspondence between the port groups and the first communication parameters is indicated by the network device, or is predefined.

In a possible design, the method further includes: determining N groups of large-scale parameters respectively corresponding to the N port groups; and determining the N groups of first communication parameters based on the N groups of large-scale parameters and a correspondence between the large-scale parameters and the first communication parameters.

In a possible design, the correspondence between the large-scale parameters and the first communication parameters is indicated by the network device, or is predefined.

In a possible design, the determining N groups of large-scale parameters respectively corresponding to the N port groups includes: determining the N groups of large-scale parameters based on the N port groups and a correspondence between the port groups and the large-scale parameters.

In a possible design, the correspondence between the port groups and the large-scale parameters is indicated by the network device, or is predefined.

In a possible design, the N port groups include a first port group; and determining the N groups of large-scale parameters corresponding to the first port group includes: receiving an activation command from the network device, where the activation command is for activating a first TCI state in a plurality of transmission configuration indicator (transmission configuration indicator, TCI) states corresponding to a first quasi-co-location (quasi-co-location, QCL) type, and the first TCI state indicates that there is a QCL relationship between a reference signal resource corresponding to the first port group and a target reference signal resource; and determining, based on a large-scale parameter corresponding to the target reference signal resource, the large-scale parameters corresponding to the first port group.

In a possible design, a correspondence between the first TCI state and the first port group is indicated by the network device, or is predefined.

In a possible design, the method further includes: receiving configuration information from the network device, where the configuration information is for configuring the plurality of TCI states.

In a possible design, the N port groups include the first port group, and first communication parameters corresponding to the first port group include a receiving parameter in frequency domain and/or a receiving parameter in time domain.

In a possible design, the receiving parameter in frequency domain includes at least one of the following: a first parameter, where the first parameter indicates a frequency domain density of a reference signal corresponding to the first port group; a second parameter, where the second parameter indicates a frequency domain filtering granularity and/or a frequency domain filtering coefficient corresponding to the first port group; and a third parameter, where the third parameter indicates a frequency domain detection granularity and/or a frequency domain detection coefficient corresponding to the first port group.

In a possible design, the receiving parameter in time domain includes at least one of the following: a fourth parameter, where the fourth parameter indicates a time domain density of the reference signal corresponding to the first port group; a fifth parameter, where the fifth parameter indicates a time domain filtering granularity and/or a time domain filtering coefficient corresponding to the first port group; and a sixth parameter, where the sixth parameter indicates a time domain detection granularity and/or a time domain detection coefficient corresponding to the first port group.

In a possible design, the N port groups include a first port group, and first communication parameters corresponding to the first port group include a sending parameter in frequency domain and/or a sending parameter in time domain.

In a possible design, the sending parameter in frequency domain includes at least one of the following: a seventh parameter, where the seventh parameter indicates a frequency domain density of a reference signal corresponding to the first port group; and an eighth parameter, where the eighth parameter indicates a frequency domain precoding granularity corresponding to the first port group.

In a possible design, the sending parameter in time domain includes at least one of the following: a ninth parameter, where the ninth parameter indicates a time domain density of the reference signal corresponding to the first port group; and a tenth parameter, where the tenth parameter indicates a time domain precoding granularity corresponding to the first port group.

According to a second aspect, an embodiment of this application provides a communication method. The method may be applied to a network device or a module (for example, a chip) in the network device. For example, the method is applied to the network device. In the method, the network device sends first indication information to a terminal device, where the first indication information indicates M ports, the M ports belong to N port groups, the N port groups are in one-to-one correspondence with N groups of second communication parameters, and both M and N are integers greater than 1; and communicates with the terminal device based on the N groups of second communication parameters.

The second communication parameter herein may be a parameter on a network device side, namely, a parameter used when the network device communicates with the terminal device. For example, the second communication parameter may be a receiving parameter. In this case, the network device may receive a transmission channel (for example, a PUSCH) from the terminal device based on the N groups of second communication parameters. For another example, the second communication parameter may be a sending parameter. In this case, the network device may send a transmission channel (for example, a PDSCH) to the terminal device based on the N groups of second communication parameters.

According to the foregoing method, because the N port groups are in one-to-one correspondence with the N groups of second communication parameters, the network device may use different second communication parameters for different port groups, to effectively avoid a problem that a bit error rate at a receiving end is high because a same solution is used for a plurality of ports, and ensure normal communication between the network device and the terminal device.

In a possible design, the method further includes: determining the N groups of second communication parameters based on the N port groups and a correspondence between the port groups and the second communication parameters.

In a possible design, the correspondence between the port groups and the second communication parameters is predefined.

In a possible design, the method further includes: determining N groups of large-scale parameters respectively corresponding to the N port groups; and determining the N groups of second communication parameters based on the N groups of large-scale parameters and a correspondence between the large-scale parameters and the second communication parameters.

In a possible design, the correspondence between the large-scale parameters and the second communication parameters is predefined.

In a possible design, the N port groups are in one-to-one correspondence with N groups of first communication parameters, and the method further includes: sending second indication information to the terminal device, where the second indication information indicates the N groups of first communication parameters, and the N groups of first communication parameters are for communication between the terminal device and the network device.

In a possible design, the N port groups include a first port group, and the method further includes: sending an activation command to the terminal device, where the activation command is for activating a first TCI state in a plurality of TCI states corresponding to a first QCL type, and the first TCI state indicates that there is a QCL relationship between a reference signal resource corresponding to the first port group and a target reference signal resource.

In a possible design, a correspondence between the first TCI state and the first port group is indicated by the network device, or is predefined.

In a possible design, the method further includes: sending configuration information to the terminal device, where the configuration information is for configuring the plurality of TCI states.

In a possible design, the N port groups include a first port group, and second communication parameters corresponding to the first port group include a receiving parameter in frequency domain and/or a receiving parameter in time domain.

In a possible design, the receiving parameter in frequency domain includes at least one of the following: a first parameter, where the first parameter indicates a frequency domain density of a reference signal corresponding to the first port group; a second parameter, where the second parameter indicates a frequency domain filtering granularity and/or a frequency domain filtering coefficient corresponding to the first port group; and a third parameter, where the third parameter indicates a frequency domain detection granularity and/or a frequency domain detection coefficient corresponding to the first port group.

In a possible design, the receiving parameter in time domain includes at least one of the following: a fourth parameter, where the fourth parameter indicates a time domain density of the reference signal corresponding to the first port group; a fifth parameter, where the fifth parameter indicates a time domain filtering granularity and/or a time domain filtering coefficient corresponding to the first port group; and a sixth parameter, where the sixth parameter indicates a time domain detection granularity and/or a time domain detection coefficient corresponding to the first port group.

In a possible design, the N port groups include the first port group, and communication parameters corresponding to the first port group include a sending parameter in frequency domain and/or a sending parameter in time domain.

In a possible design, the sending parameter in frequency domain includes at least one of the following: a seventh parameter, where the seventh parameter indicates a frequency domain density of a reference signal corresponding to the first port group; and an eighth parameter, where the eighth parameter indicates a frequency domain precoding granularity corresponding to the first port group.

In a possible design, the sending parameter in time domain includes at least one of the following: a ninth parameter, where the ninth parameter indicates a time domain density of the reference signal corresponding to the first port group; and a tenth parameter, where the tenth parameter indicates a time domain precoding granularity corresponding to the first port group.

According to a third aspect, this application provides a communication apparatus. The communication apparatus can implement a function in the first aspect above. For example, the communication apparatus includes a corresponding module, unit, or means (means) for performing an operation in the first aspect above. The module, unit, or means may be implemented by software, or implemented by hardware, or implemented by hardware executing corresponding software.

In a possible design, the communication apparatus includes a processing unit and a communication unit. The communication unit may be configured to receive/send a signal, to implement communication between the communication apparatus and another apparatus. The processing unit may be configured to perform some internal operations of the communication apparatus. Functions performed by the processing unit and the communication unit may correspond to the operations in the first aspect above.

In a possible design, the communication apparatus includes a processor, and the processor may be coupled to a memory. The memory may store a necessary computer program or necessary instructions for implementing the functions in the first aspect above. The processor may execute the computer program or the instructions stored in the memory. When the computer program or the instructions are executed, the communication apparatus is caused to implement the method in any one of the possible designs or implementations of the first aspect above.

In a possible design, the communication apparatus includes a processor and a memory. The memory may store a necessary computer program or necessary instructions for implementing the functions in the first aspect above. The processor may execute the computer program or the instructions stored in the memory. When the computer program or the instructions are executed, the communication apparatus is caused to implement the method in any one of the possible designs or implementations of the first aspect above.

In a possible design, the communication apparatus includes a processor and an interface circuit, and the processor is configured to: communicate with another apparatus through the interface circuit, and perform the method in any one of the possible designs or implementations of the first aspect above.

According to a fourth aspect, this application provides a communication apparatus. The communication apparatus can implement a function related in the second aspect above. For example, the communication apparatus includes a corresponding module, unit, or means for performing an operation in the second aspect above. The function, unit, or means may be implemented by software, or implemented by hardware, or implemented by hardware executing corresponding software.

In a possible design, the communication apparatus includes a processing unit and a communication unit. The communication unit may be configured to receive/send a signal, to implement communication between the communication apparatus and another apparatus. For example, the communication unit is configured to send system information to a terminal device. The processing unit may be configured to perform some internal operations of the communication apparatus. Functions performed by the processing unit and the communication unit may correspond to the operations in the second aspect above.

In a possible design, the communication apparatus includes a processor, and the processor may be coupled to a memory. The memory may store a necessary computer program or necessary instructions for implementing the functions in the second aspect above. The processor may execute the computer program or the instructions stored in the memory. When the computer program or the instructions are executed, the communication apparatus is caused to implement the method in any one of the possible designs or implementations of the second aspect above.

In a possible design, the communication apparatus includes a processor and a memory. The memory may store a necessary computer program or necessary instructions for implementing the functions in the second aspect above. The processor may execute the computer program or the instructions stored in the memory. When the computer program or the instructions are executed, the communication apparatus is caused to implement the method in any one of the possible designs or implementations of the second aspect above.

In a possible design, the communication apparatus includes a processor and an interface circuit, and the processor is configured to: communicate with another apparatus through the interface circuit, and perform the method in any one of the possible designs or implementations of the second aspect above.

It may be understood that in the third aspect or the fourth aspect above, the processor may be implemented by hardware or software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fifth aspect, this application provides a communication system. The communication system may include the communication apparatus in the third aspect above and the communication apparatus in the fourth aspect above.

According to a sixth aspect, this application provides a computer-readable storage medium. The computer storage medium stores computer-readable instructions. When a computer reads and executes the computer-readable instructions, the computer is caused to perform the method in any one of the possible designs of the first aspect or the second aspect above.

According to a seventh aspect, this application provides a computer program product. When a computer reads and executes the computer program product, the computer is caused to perform the method in any one of the possible designs of the first aspect or the second aspect above.

According to an eighth aspect, this application provides a chip. The chip includes a processor. The processor is coupled to a memory to read and execute a software program stored in the memory, to implement the method in any one of the possible designs of the first aspect or the second aspect above.

## BRIEF DESCRIPTION OF DRAWINGS

FIG. 1 is a diagram of a network architecture to which an embodiment of this application is applicable;

FIG. 2 is a diagram of signal multipath transmission according to an embodiment of this application;

FIG. 3 is a schematic flowchart corresponding to a communication method according to an embodiment of this application;

FIG. 4 is a schematic flowchart corresponding to a communication method according to an embodiment of this application;

FIG. 5 is a block diagram of a possible example of an apparatus according to an embodiment of this application;

FIG. 6 is a diagram of a structure of a terminal device according to an embodiment of this application; and

FIG. 7 is a diagram of a structure of a network device according to an embodiment of this application.

## DESCRIPTION OF EMBODIMENTS

The following describes the technical solutions in embodiments of this application with reference to the accompanying drawings in embodiments of this application.

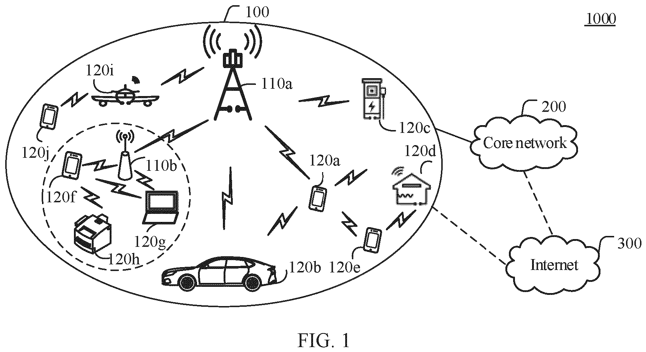

FIG. 1 is a diagram of an architecture of a communication system to which an embodiment of this application is applied. As shown in FIG. 1, the communication system 1000 includes a radio access network 100 and a core network 200. Optionally, the communication system 1000 may further include an internet 300. The radio access network 100 may include at least one network device (including a radio access network device), for example, 110a and 110b in FIG. 1, and may further include at least one terminal device, for example, 120a to 120j in FIG. 1. 110a is a base station, 110b is a micro base station, 120a, 120e, 120f, and 120j are mobile phones, 120b is a vehicle, 120c is a fuel dispenser, 120d is a home access point (home access point, HAP) deployed indoors or outdoors, 120g is a notebook computer, 120h is a printer, and 120i is an uncrewed aerial vehicle.

In FIG. 1, the terminal device may be connected to the radio access network device, and the radio access network device may be connected to a core network device in the core network. The core network device and the radio access network device may be different independent physical devices, or functions of the core network device and logical functions of the radio access network device are integrated into a same physical device, or some functions of the core network device and some functions of the radio access network device are integrated into one physical device. Terminal devices may be connected to each other in a wired or wireless manner, and radio access network devices may be connected to each other in a wired or wireless manner. FIG. 1 is merely a diagram. The communication system may further include another device, for example, a wireless relay device and a wireless backhaul device. This is not drawn in FIG. 1.

The following describes the network device and the terminal device.

(1) Network device

A network device includes a radio access network device (which may also be referred to as an access network device). The network device may be a base station, an evolved NodeB (evolved NodeB, eNodeB), a transmission reception point (transmission reception point, TRP), a next generation NodeB (next generation NodeB, gNB) in a 5th generation (5th generation, 5G) mobile communication system, a base station in a 6th generation (6th generation, 6G) mobile communication system, a base station in a future mobile communication system, an access node in a wireless fidelity (wireless fidelity, Wi-Fi) system, or the like. The network device may alternatively be a module or unit that completes some functions of a base station, for example, may be a central unit (central unit, CU), or may be a distributed unit (distributed unit, DU). The network device may be a macro base station (for example, 110a in FIG. 1), may be a micro base station or an indoor base station (for example, 110b in FIG. 1), or may be a relay node or a donor node. A specific technology and a specific device form that are used by the network device are not limited in embodiments of this application.

In embodiments of this application, an apparatus configured to implement a function of the network device may be the network device, or may be an apparatus that can support the network device in implementing the function, for example, a chip system. The apparatus may be mounted in the network device. The chip system may include a chip, or may include a chip and another discrete device. In the technical solutions provided in embodiments of this application, an example in which the apparatus configured to implement the function of the network device is the network device is used, to describe the technical solutions provided in embodiments of this application.

(2) Terminal device

A terminal device may also be referred to as a terminal, user equipment (user equipment, UE), a mobile station, a mobile terminal, or the like. The terminal device may be widely used in various scenarios, for example, a device-to-device (device-to-device, D2D) scenario, a vehicle to everything (vehicle to everything, V2X) communication scenario, a machine-type communication (machine-type communication, MTC) scenario, an internet of things (internet of things, IoT) scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, and a smart city scenario. The terminal device may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal device are not limited in embodiments of this application.

In embodiments of this application, an apparatus configured to implement a function of the terminal device may be the terminal device, or may be an apparatus that can support the terminal device in implementing the function, for example, a chip system. The apparatus may be installed in the terminal device. In the technical solutions provided in embodiments of this application, an example in which the apparatus configured to implement the function of the terminal device is the terminal device is used, to describe the technical solutions provided in embodiments of this application.

In addition, a same terminal device or network device may provide different functions in different application scenarios. For example, the mobile phones in FIG. 1 include 120a, 120e, 120f, and 120j. The mobile phone 120a may access the base station 110a, connect to the vehicle 120b, directly communicate with the mobile phone 120e, and access the HAP. The mobile phone 120e may access the HAP and directly communicate with the mobile phone 120a. The mobile phone 120f may access the micro base station 110b, connect to the notebook computer 120g, and connect to the printer 120h. The mobile phone 120j may control the uncrewed aerial vehicle 120i.

Roles of the network device and the terminal device may be relative. For example, the helicopter or the unmanned aerial vehicle 120i in FIG. 1 may be configured as a mobile base station. For the terminal device 120j that accesses the radio access network 100 through 120i, the terminal device 120i is a base station. However, for the base station 110a, 120i is a terminal device. In other words, 110a communicates with 120i through a wireless air interface protocol. Certainly, communication between 110a and 120i may alternatively be performed based on an interface protocol between base stations. In this case, for 110a, 120i is also a base station. Therefore, both the radio access network device and the terminal device may be collectively referred to as communication apparatuses, 110a and 110b in FIG. 1 may be referred to as communication apparatuses having a base station function, and 120a to 120j in FIG. 1 may be referred to as communication apparatuses having a terminal device function.

The network device and the terminal device may be at fixed locations, or may be movable. The network device and the terminal device may be deployed on the land, including an indoor device, an outdoor device, a handheld device, or a vehicle-mounted device; may be deployed on the water surface; or may be deployed on a plane, a balloon, and a satellite in the air. Application scenarios of the network device and the terminal device are not limited in embodiments of this application.

Communication may be performed between a network device and a terminal device, between network devices, or between terminal devices by using a licensed spectrum, an unlicensed spectrum, or both a licensed spectrum and an unlicensed spectrum, may be performed by using a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

The communication system shown in FIG. 1 above may support various radio access technologies (radio access technologies, RATs). For example, the communication system shown in FIG. 1 may be a 4th generation (4th generation, 4G) communication system (which may also be referred to as a long term evolution (long term evolution, LTE) communication system), a 5G communication system (which may also be referred to as a new radio (new radio, NR) communication system), a 6G communication system, or a future-oriented evolved system. A communication system and a service scenario described in embodiments of this application are intended to describe the technical solutions in embodiments of this application more clearly, but constitute no limitation on the technical solutions provided in embodiments of this application. A person of ordinary skill in the art may learn that the technical solutions provided in embodiments of this application are also applicable to a similar technical problem as the communication system evolves and a new service scenario emerges.

The following first describes related technical features in embodiments of this application. It should be noted that these explanations are intended to facilitate understanding of embodiments of this application, but should not be considered as a limitation on the protection scope claimed in this application.

## 1. Reference signal

In the communication system shown in FIG. 1, a network device may send control information to a terminal device through a control channel (for example, a PDCCH), to allocate a transmission parameter of a data channel to the terminal device. The data channel may be, for example, a PDSCH or a PUSCH. The control channel (for example, the PDCCH) or the data channel (for example, the PDSCH or the PUSCH) may carry a reference signal, for example, a DMRS. The data channel is used as an example. The DMRS may be for estimating an equivalent channel of data carried on the data channel, to detect the data on the data channel. Signal processing such as precoding the same as that on the data is usually performed on the DMRS, to ensure that the DMRS and the data pass through a same equivalent channel.

It is assumed that a transmitting end sends a DMRS vector $s$, and sends a data signal vector $x$, same precoding (for example, multiplying by a same precoding matrix $P$) is performed on the DMRS and the data, and precoded data and DMRS are simultaneously transmitted and pass through a same channel. Corresponding signal vectors received by a receiving end may be represented as:

$$\text{Data: } y = HPx + n = \tilde{H}x + n;$$

and

$$\text{DMRS: } r = HPs + n = \tilde{H}s + n.$$

$y$ represents a data signal vector received by the receiving end, $r$ represents a DMRS vector received by the receiving end, $H$ represents a channel that the data and the DMRS actually pass through, $n$ represents a noise signal vector, and $\tilde{H}$ represents an equivalent channel that the data and the DMRS pass through.

Because both the data and the DMRS pass through a same equivalent channel, the receiving end may obtain, based on the known DMRS vector s and by using a channel estimation algorithm, estimation for the equivalent channel, where the DMRS vector includes DMRS symbols corresponding to a plurality of DMRS ports. Further, the receiving end may complete data detection based on the equivalent channel.

## 2. Port and port group

A port may be an antenna port (antenna port), and the port may be understood as a transmit antenna identified by a receiving end, or a transmit antenna that can be distinguished in space. One port may be configured for each virtual antenna, and each virtual antenna may be a weighted combination of a plurality of physical antennas. Different ports may be distinguished by using different port indexes (or port numbers). A port for sending a reference signal may be referred to as a reference signal port. The reference signal may include, for example, a DMRS, a channel state information-reference signal (channel state information-reference signal, CSI-RS), and a sounding reference signal (sounding reference signal, SRS). This is not specifically limited.

One port group may include one or more ports, and different port groups may be distinguished by using different port group indexes (or port group numbers). Quantities of ports included in different port groups may be the same or different. This is not specifically limited. In embodiments of this application, the plurality of ports may be grouped into different port groups in a plurality of manners. For example, as shown in Table 1, a port 1 to a port 8 are grouped into a port group 1, a port 9 to a port 16 are grouped into a port group 2, and a port 17 to a port 32 are grouped into a port group 3 based on port indexes of the plurality of ports.

**Table 1: Ports included in a port group**

| Port group index | Port index |
| --- | --- |
| 1 | 1 to 8 |
| 2 | 9 to 16 |
| 3 | 17 to 32 |

### 3. QCL relationship

A QCL relationship indicates that a plurality of reference signal resources have one or more same or similar communication features. For the plurality of reference signal resources that have the QCL relationship, a same or similar communication configuration may be used. For example, if two reference signal resources have the quasi-co-location relationship, a large-scale channel property corresponding to one reference signal resource may be deduced from a large-scale channel property corresponding to the other reference signal resource.

The large-scale channel property may include a plurality of possible large-scale parameters. In a 5G communication system, based on different large-scale parameters, the QCL relationship is classified into the following four QCL types:

a QCL type A: a Doppler shift (Doppler shift), a Doppler spread (Doppler spread), an average channel delay (average delay), and a delay spread (delay spread);
a QCL type B: a Doppler shift and a Doppler spread;
a QCL type C: an average channel delay and a delay spread; and
a QCL type D: a spatial receive parameter (spatial rx parameter). The spatial receive parameter may include a dominant angle of arrival (angle of arrival, AoA) or an average angle of arrival of a signal.

QCL relationships of different QCL types may be applied to different scenarios. For example, because the QCL type A corresponds to a plurality of large-scale parameters, a channel characteristic can be described more comprehensively, to help a receiving end (for example, a terminal device) demodulate data that is on a channel. In embodiments of this application, an example in which a QCL type is the QCL type A is used for description.

### 4. TCI state

A network device may configure a plurality of TCI states for a terminal device via a radio resource control (radio resource control, RRC) message, and then activate one or more of the TCI states via a media access control (media access control, MAC) control element (control element, CE). When the plurality of TCI states are activated, the network device may further send downlink control information (downlink control information, DCI) to the terminal device, to indicate one of the plurality of activated TCI states. In this case, the MAC CE and the DCI may be collectively referred to as an activation command.

The TCI state may include a TCI state identifier (TCI state ID) and a TCI state parameter, and the TCI state parameter is for configuring a QCL relationship between a plurality of reference signal resources. For example, the TCI state parameter may include an identifier of a QCL type corresponding to the TCI state and QCL information. The QCL information may include a cell identifier and a reference signal resource identifier, and may further include other possible information. For example, if the QCL type corresponding to the TCI state is a QCL type A, and the QCL information includes an identifier of a cell 1 and an identifier of a CSI-RS resource 1, the TCI state indicates that there is a QCL relationship corresponding to the QCL type A between a DMRS resource in a PDSCH of the cell 1 and the CSI-RS resource 1. In other words, the terminal device may determine, based on a large-scale parameter corresponding to the CSI-RS resource 1, a large-scale parameter corresponding to the DMRS resource that is in the PDSCH.

### 5. Multipath effect

A radio channel has a multipath effect. Due to phenomena of refraction, reflection, and the like of a building, a radio signal may arrive at a receiving end through a plurality of paths during propagation. Because propagation distances of different paths are different, the signal arrives at the receiving end through different paths at different time, and has a specific delay spread in time domain.

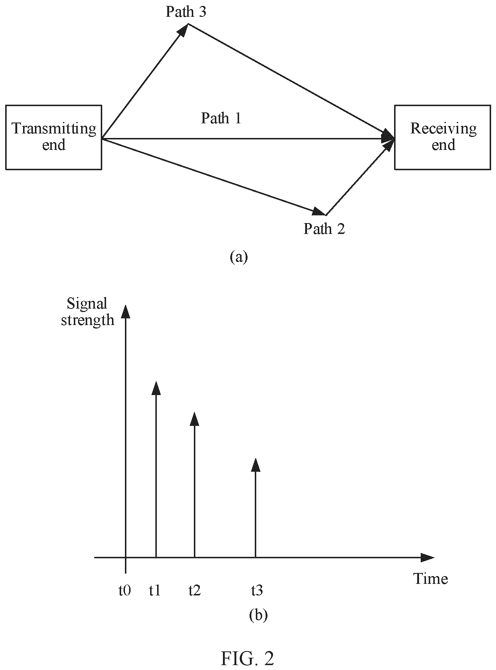

FIG. 2 is a diagram of signal multipath transmission. Three paths are used as an example. As shown in (a) in FIG. 2, a signal from a transmitting end may arrive at a receiving end through a path 1, a path 2, and a path 3. As shown in (b) in FIG. 2, after being transmitted through different paths, signals arrive at the receiving end at different time. t0 is a reference time point, and may be understood as a moment at which a receiver starts to receive the signals. t1, t2, and t3 respectively indicate time at which the signals arrive at the receiving end through the three different paths. t1 corresponds to the path 1, t2 corresponds to the path 2, and t3 corresponds to the path 3. From a perspective of the receiving end, the signals passing through a plurality of paths arrive at the receiving end at different time. Further, because different delays of the plurality of paths cause a phase difference, after the signals on the plurality of paths are combined, some signals are strong in frequency and some signals are weak in frequency. In other words, if the delays corresponding to the plurality of paths are different, frequency-selective fading of a frequency domain signal is caused.

Duration between a time point at which a signal sent by the transmitting end arrives at the receiving end through the farthest path and the reference time point may be referred to as a multipath delay spread (or a delay spread). For example, a time difference between t3 and t0 is the multipath delay spread. An average value of duration between time points at which the signals sent by the transmitting end arrive at the receiving end through all paths and the reference time point may be referred to as an average channel delay. For example, an average value of the time difference between t3 and t0, a time difference between t2 and t0, and a time difference between t1 and t0 is the average channel delay.

## 6. Doppler effect

A radio channel has a Doppler effect. Because a relative movement may occur between a transmitting end and a receiving end, a Doppler shift is caused, and a time-varying characteristic of a channel is caused, in other words, time-selective fading occurs on the channel. One of specific manifestations of the time-varying characteristic in a mobile communication system is the Doppler shift, to be specific, a single-frequency signal is presented as a signal with a specific bandwidth and a frequency envelope after passing through a time-varying fading channel, and this may also be referred to as frequency dispersion (frequency dispersion) of a channel. The time-selective fading causes signal distortion (for example, when a user makes a call, signal strength at a point A is different from signal strength at a point B, and if the user moves from the point A to the point B during the call, the time-selective fading may greatly affect call quality, resulting in poor call quality).

A frequency difference, between the transmitting end and the receiving end, caused by the Doppler effect may be referred to as the Doppler shift. A largest value in Doppler shifts of a plurality of paths between the transmitting end and the receiving end is denoted as a Doppler spread.

## 7. Receiving parameter

A first port group is used as an example, and a receiving parameter corresponding to the first port group may include a receiving parameter in frequency domain and/or a receiving parameter in time domain. The receiving parameter in frequency domain may include at least one of a first parameter, a second parameter, and a third parameter. The receiving parameter in time domain may include at least one of a fourth parameter, a fifth parameter, and a sixth parameter.

(1) First parameter and fourth parameter

A first parameter indicates a frequency domain density of a reference signal corresponding to a first port group. For example, the frequency domain density of the reference signal may be a quantity of subcarriers occupied by the reference signal in one physical resource block (physical resource block, PRB). A fourth parameter indicates a time domain density of the reference signal corresponding to the first port group. For example, the time domain density of the reference signal may be a quantity of symbols occupied by the reference signal in one transmission time interval (transmission time interval, TTI) (or one slot). The time domain density of the reference signal is used as an example, and a value of the time domain density of the reference signal may be a positive integer, or may be a decimal. For example, the value of the time domain density of the reference signal may be 0.5 (this case may be understood as that the reference signal occupies one symbol in two TTIs, where one of the two TTIs does not include the reference signal, and the reference signal occupies one symbol in the other TTI).

The receiving end may receive, on a corresponding time-frequency resource based on the time-frequency density of the reference signal corresponding to the first port group and a preset time-frequency resource mapping rule, the reference signal corresponding to the first port group, where the reference signal may be for channel estimation by the receiving end.

(2) Second parameter and fifth parameter

A second parameter indicates a frequency domain filtering granularity and/or a frequency domain filtering coefficient corresponding to a first port group. A fifth parameter indicates a time domain filtering granularity and/or a time domain filtering coefficient corresponding to the first port group.

When performing channel estimation, a receiving end may perform joint channel estimation based on a plurality of frequency domain units in frequency domain, and may perform joint channel estimation based on a plurality of time domain units in time domain, to improve channel estimation performance, and reduce extrapolation calculation of the channel estimation. During the channel estimation, a channel estimation deviation obtained through the extrapolation calculation is large. Therefore, accuracy of the channel estimation can be improved by reducing the extrapolation calculation. The frequency domain filtering granularity corresponding to the first port group may be understood as a quantity of frequency domain units for performing the joint channel estimation, and the frequency domain unit may be, for example, a PRB. The time domain filtering granularity corresponding to the first port group may be understood as a quantity of time domain units for performing the joint channel estimation, and the time domain unit may be, for example, a TTI or a slot. The following uses an example in which the frequency domain filtering granularity includes W1 PRBs and the time domain filtering granularity includes W2 TTIs, where both W1 and W2 are positive integers.

The frequency domain filtering coefficient corresponding to the first port group is for filtering, in frequency domain, channel estimation results of a reference signal corresponding to the first port group, to obtain channel estimation results in W1 frequency domain units corresponding to the first port group. The frequency domain filtering coefficient corresponding to the first port group may be determined based on the frequency domain filtering granularity corresponding to the first port group and a large-scale parameter corresponding to the first port group. For example, the frequency domain filtering coefficient corresponding to the first port group may be determined in a manner of determining a frequency domain filtering coefficient based on a frequency domain filtering granularity and a large-scale parameter in a conventional technology. The time domain filtering coefficient corresponding to the first port group is for filtering, in time domain, the channel estimation results of the reference signal corresponding to the first port group, to obtain channel estimation results in W2 time domain units corresponding to the first port group. The time domain filtering coefficient corresponding to the first port group may be determined based on the time domain filtering granularity corresponding to the first port group and the large-scale parameter corresponding to the first port group. For example, the time domain filtering coefficient corresponding to the first port group may be determined in a manner of determining a time domain filtering coefficient based on a time domain filtering granularity and a large-scale parameter in the conventional technology.

(2) Third parameter and sixth parameter

A third parameter indicates a frequency domain detection granularity and/or a frequency domain detection coefficient corresponding to a first port group, and a sixth parameter indicates a time domain detection granularity and/or a time domain detection coefficient corresponding to the first port group.

After obtaining channel estimation results in a channel estimation process, a receiving end may perform joint detection based on a plurality of frequency domain units in frequency domain, and may perform joint detection based on a plurality of time domain units in time domain, to improve detection performance. "Detection" in embodiments of this application may also be understood as "demodulation". The frequency domain detection granularity corresponding to the first port group may be understood as a quantity of frequency domain units on which the joint detection is performed, and the time domain detection granularity corresponding to the first port group may be understood as a quantity of time domain units on which the joint detection is performed. For example, the frequency domain detection granularity may be equal to a frequency domain filtering granularity (in other words, the frequency domain detection granularity includes W1 PRBs), and the time domain detection granularity may be equal to a time domain filtering granularity (the time domain detection granularity includes W2 TTIs).

The frequency domain detection coefficient corresponding to the first port group is for detecting, in frequency domain, data corresponding to the first port group. The frequency domain detection coefficient corresponding to the first port group may be determined based on the frequency domain detection granularity corresponding to the first port group and channel estimation results in W1 frequency domain units corresponding to the first port group. For example, the frequency domain detection coefficient corresponding to the first port group may be determined in a manner of determining a frequency domain detection coefficient based on a frequency domain detection granularity and channel estimation results in a conventional technology. The time domain detection coefficient corresponding to the first port group is for detecting, in time domain, the data corresponding to the first port group. The time domain detection coefficient corresponding to the first port group may be determined based on the time domain detection granularity corresponding to the first port group and channel estimation results in W2 time domain units corresponding to the first port group. For example, the time domain detection coefficient corresponding to the first port group may be determined in a manner of determining a time domain detection coefficient based on time domain detection granularity and channel estimation results in the conventional technology.

The receiving end may detect the data based on the frequency domain detection coefficient in frequency domain, and may detect the data based on the time domain detection coefficient in time domain, to complete receiving of the data.

## 8. Sending parameter

A sending parameter may include a sending parameter in frequency domain and/or a sending parameter in time domain. The sending parameter in frequency domain may include at least one of a seventh parameter and an eighth parameter, and the sending parameter in time domain may include at least one of a ninth parameter and a tenth parameter.

(1) Seventh parameter and ninth parameter

A seventh parameter indicates a frequency domain density of a reference signal corresponding to a first port group, and a ninth parameter indicates a time domain density of the reference signal corresponding to the first port group. For details, refer to descriptions of the first parameter and the fourth parameter above.

A transmitting end may send, on a corresponding time-frequency resource based on the time-frequency density of the reference signal corresponding to the first port group and a preset time-frequency resource mapping rule, the reference signal corresponding to the first port group.

(2) Eighth parameter and tenth parameter

An eighth parameter indicates a frequency domain precoding granularity corresponding to a first port group, and a tenth parameter indicates a time domain precoding granularity corresponding to the first port group.

In a MIMO technology, data may be received and sent between a transmitting end and a receiving end through a plurality of antennas. In other words, there are a plurality of spatial channels between the transmitting end and the receiving end. To resist interference between spatial channels and improve transmission reliability, to-be-sent data may be first encoded by using a specific matrix and then sent. An encoding process of the to-be-sent data may be referred to as precoding.

(2.1) Frequency domain precoding granularity

In a precoding process, a transmitting end may divide a channel resource into several frequency domain resource block groups at a frequency domain precoding granularity, and perform precoding in a unit of the frequency domain resource block group obtained through division. The frequency domain resource block group obtained through division may be referred to as a precoding resource block group (precoding resource block group, PRG), and the frequency domain precoding granularity may be equal to a size of the PRG.

Specifically, for each PRG, the transmitting end may precode, based on $P=M*S$, data mapped to the PRG. S represents the data mapped to the PRG, M represents a precoding matrix, and P represents to-be-sent encoded data. Precoding matrices used by different PRGs are independent, and may be the same or may be different. A unit of the frequency domain precoding granularity may be a PRB, or may be another possible frequency domain unit. This is not specifically limited.

(2.2) Time domain precoding granularity

In a precoding process, a transmitting end may divide a channel resource into several time domain resource block groups at a time domain precoding granularity, and perform precoding in a unit of the time domain resource block group obtained through division. A unit of the time domain precoding granularity may be a TTI, or may be another possible time domain unit. This is not specifically limited.

In the communication system shown in FIG. 1, when the network device communicates with the terminal device through the control channel or the data channel, the network device may indicate, to the terminal device, a plurality of DMRS ports allocated to the terminal device. For example, the data channel is the PDSCH. The network device may send the DMRS and the data to the terminal device based on sending parameters corresponding to the plurality of DMRS ports. The DMRS and the data are carried on the PDSCH. Correspondingly, the terminal device may receive the DMRS and the data based on receiving parameters corresponding to the plurality of DMRS ports.

When a size of an antenna array is small, it may be assumed that visible scattering bodies or multi-paths of all antenna elements are completely the same, and a same solution is used on the plurality of DMRS ports based on the assumption, in other words, the sending parameters corresponding to the plurality of DMRS ports are the same, and the receiving parameters corresponding to the plurality of DMRS ports are the same. However, after the massive MIMO technology is introduced, the size of the antenna array is large. Consequently, in a spherical wavefront model of a near-field channel, delays for arriving at different antennas are different, and randomness of scattering environments of different antennas is more definite. In this case, if a same solution is used on the plurality of DMRS ports, a bit error rate at the receiving end may be high, and transmission between the network device and the terminal device may fail.

For example, when the size of the antenna array is large, because the delays for arriving at different antennas may be different, multipath delay spreads corresponding to different DMRS ports may be different. For a DMRS port, a coherence bandwidth corresponding to the DMRS port is equal to a reciprocal of a multipath delay spread. In the coherence bandwidth, a frequency domain response is unchanged, that is, flat. Therefore, usually, the frequency domain precoding granularity may be determined based on the coherence bandwidth. For example, the frequency domain precoding granularity may be equal to the coherence bandwidth. When multipath delay spreads corresponding to the plurality of DMRS ports are different, if a same frequency domain precoding granularity is used for the plurality of DMRS ports, the frequency domain precoding granularity may be greater than coherent bandwidths corresponding to some DMRS ports. Consequently, signal waveform distortion is caused, inter-symbol interference is caused (in other words, frequency-selective fading occurs), and data transmission may fail.

Based on this, in embodiments of this application, communication between the network device and the terminal device in massive MIMO is researched.

For example, a communication method provided in embodiments of this application may include: The network device sends first indication information to the terminal device, where the first indication information indicates M ports, the M ports belong to N port groups, the N port groups are in one-to-one correspondence with N groups of first communication parameters, the N port groups are in one-to-one correspondence with N groups of second communication parameters, and both M and N are integers greater than 1. The first communication parameter may be a parameter on a terminal device side, namely, a parameter used when the terminal device communicates with the network device. The second communication parameter may be a parameter on a network device side, namely, a parameter used when the network device communicates with the terminal device.

For example, the first communication parameter is a receiving parameter, and the second communication parameter is a sending parameter. In this case, the network device may send information to the terminal device based on N groups of sending parameters. Correspondingly, the terminal device may receive the information based on N groups of receiving parameters.

For another example, the first communication parameter is a sending parameter, and the second communication parameter is a receiving parameter. In this case, the terminal device may send information to the network device based on N groups of sending parameters. Correspondingly, the network device may receive the information based on N groups of receiving parameters.

The following describes the communication method provided in embodiments of this application in detail with reference to Embodiment 1 and Embodiment 2.

## Embodiment 1

In Embodiment 1, a first communication parameter is a receiving parameter, and a second communication parameter is a sending parameter.

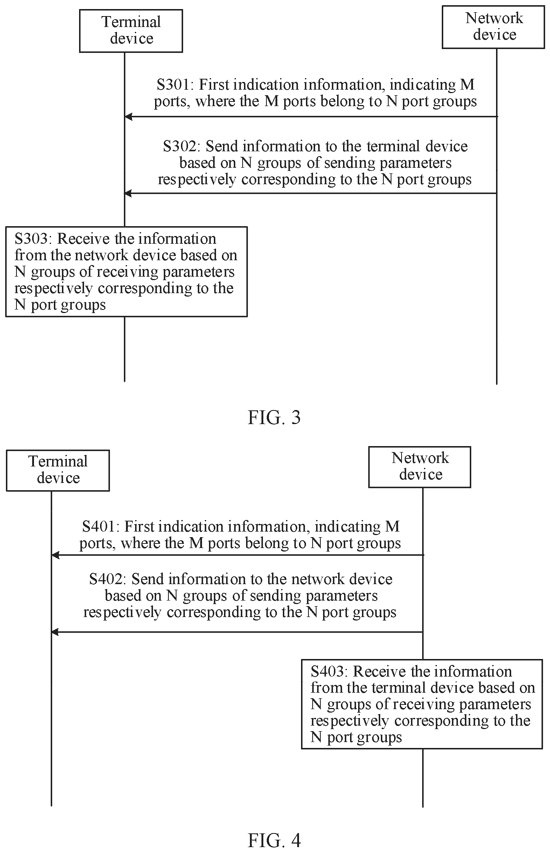

FIG. 3 is a schematic flowchart corresponding to a communication method according to an embodiment of this application. As shown in FIG. 3, the method may include the following steps.

S301: A network device sends first indication information to a terminal device, where the first indication information indicates M ports. Correspondingly, the terminal device may receive the first indication information, and determine, based on the first indication information, that ports allocated by the network device to the terminal device include the M ports.

Herein, the M ports may belong to N port groups. The network device may support a plurality of ports. For example, the network device supports 32 ports, and the 32 ports may belong to three port groups, as shown in Table 1 above. The network device may allocate the M ports from the 32 ports to the terminal device, and send the first indication information to the terminal device. For example, the M ports allocated by the network device to the terminal device include a port 1, a port 2, a port 9, a port 10, and a port 17. Because the port 1 and the port 2 belong to a port group 1, the port 9 and the port 10 belong to a port group 2, and the port 17 belongs to a port group 3, the N port groups may include the port group 1, the port group 2, and the port group 3.

For example, from a perspective of the network device, the network device may determine, based on a correspondence between ports and port groups (for example, the correspondence shown in Table 1), the N port groups to which the M ports belong. The correspondence between the ports and the port groups may be predefined in a protocol, or may be determined by the network device.

From a perspective of the terminal device, the terminal device may determine, based on a correspondence between ports and port groups (for example, the correspondence shown in Table 1), the N port groups to which the M ports belong. The correspondence between the ports and the port groups may be predefined in a protocol, or may be determined by the network device and indicated to the terminal device.

S302: The network device sends information to the terminal device based on N groups of sending parameters respectively corresponding to the N port groups, for example, sends a DMRS and data, where the DMRS and the data are carried on a PDSCH.

Herein, the network device may determine the N groups of sending parameters in a plurality of manners. The following describes two possible manners.

(1) Manner 1

The network device may determine the N groups of sending parameters based on the N port groups and a correspondence between the port groups and the sending parameters. The correspondence between the port groups and the sending parameters may be predefined in a protocol. For example, the sending parameters include a frequency domain density, a time domain density, a frequency domain precoding granularity, and a time domain precoding granularity. Table 2 shows an example of the correspondence between the port groups and the sending parameters.

**Table 2: Example of a correspondence between port groups and sending parameters**

| Port group index | Frequency domain density | Time domain density | Frequency domain precoding granularity | Time domain precoding granularity |
|---|---|---|---|---|
| 1 | 4 | 4 | 2 | 1 |
| 2 | 2 | 2 | 4 | 2 |
| 3 | 1 | 1 | 8 | 4 |

(2) Manner 2

The network device may determine N groups of large-scale parameters respectively corresponding to the N port groups, and then determine the N groups of sending parameters based on the N groups of large-scale parameters and a correspondence between the large-scale parameters and the sending parameters.

The network device may determine the N groups of large-scale parameters in a plurality of manners. For example, in a time division duplex (time division duplex, TDD) system, the network device may obtain, based on uplink and downlink reciprocity, the N groups of large-scale parameters respectively corresponding to the N port groups. For another example, the network device may determine the N groups of large-scale parameters based on the N port groups and a correspondence between the port groups and the large-scale parameters. The correspondence between the port groups and the large-scale parameters may be predefined in a protocol. An example in which the large-scale parameters include a multipath delay spread and a Doppler shift is used. Table 3 shows an example of the correspondence between the port groups and the large-scale parameters.

**Table 3: Example of a correspondence between port groups and large-scale parameters**

| Port group index | Multipath delay spread | Doppler shift |
|---|---|---|
| 1 | Multipath delay spread 1 | Doppler shift 1 |
| 2 | Multipath delay spread 2 | Doppler shift 2 |
| 3 | Multipath delay spread 3 | Doppler shift 3 |

The correspondence between the large-scale parameters and the sending parameters may be predefined in a protocol, so that the network device may determine the N groups of sending parameters based on the N groups of large-scale parameters and the correspondence between the large-scale parameters and the sending parameters. For example, the large-scale parameters include the multipath delay spread and the Doppler shift. Table 4 shows an example of a correspondence between a multipath delay spread, a frequency domain precoding granularity, and a frequency domain density. Table 5 shows an example of a correspondence between a Doppler shift, a time domain precoding granularity, and a time domain density. A unit of the multipath delay spread may be nanosecond (ns), and a unit of the Doppler shift may be Hertz (Hz).

**Table 4: Example of a correspondence between a multipath delay spread, a frequency domain precoding granularity, and a frequency domain density**

| Multipath delay spread (ns) | Frequency domain precoding granularity | Frequency domain density |
|---|---|---|
| <10 | 16 | 1 |
| 10 to 300 | 4 | 2 |
| 301 to 1000 | 2 | 3 |
| >1001 | 1 | 4 |

**Table 5: Example of a correspondence between a Doppler shift, a frequency domain precoding granularity, and a frequency domain density**

| Doppler shift (Hz) | Time domain precoding granularity | Time domain density |
|---|---|---|
| <28 | 16 | 1 |
| 28 to 740 | 4 | 2 |
| 741 to 1111 | 2 | 3 |
| >1111 | 1 | 4 |

It can be learned from Table 4 above that, for a port, a smaller multipath delay spread corresponding to the port may indicate a larger frequency domain precoding granularity corresponding to the port; and a larger multipath delay spread corresponding to the port may indicate a smaller frequency domain precoding granularity corresponding to the port. In addition, for a port, a smaller multipath delay spread corresponding to the port may indicate a smaller frequency domain density corresponding to the port; and a larger multipath delay spread corresponding to the port may indicate a larger frequency domain density corresponding to the port.

It can be learned from Table 5 above that, for a port, a smaller multipath delay spread corresponding to the port may indicate a larger time domain precoding granularity corresponding to the port; and a larger multipath delay spread corresponding to the port may indicate a smaller time domain precoding granularity corresponding to the port. In addition, for a port, a smaller multipath delay spread corresponding to the port may indicate a smaller time domain density corresponding to the port; and a larger multipath delay spread corresponding to the port may indicate a larger time domain density corresponding to the port.

S303: The terminal device receives the information from the network device based on N groups of receiving parameters respectively corresponding to the N port groups, for example, receives the DMRS and the data, where the DMRS and the data are carried on the PDSCH.

The terminal device may determine the N groups of receiving parameters in a plurality of manners. The following describes three possible manners.

(1) Manner 1

The terminal device determines the N groups of receiving parameters based on the N port groups and a correspondence between the port groups and the receiving parameters. The correspondence between the port groups and the receiving parameters may be indicated by the network device to the terminal device, or may be predefined in a protocol. For example, the receiving parameters include a frequency domain density, a time domain density, a frequency domain filtering granularity, a time domain filtering granularity, a frequency domain detection granularity, and a time domain detection granularity. Table 6 shows an example of the correspondence between the port groups and the receiving parameters.

**Table 6: Example of a correspondence between port groups and receiving parameters**

| Port group index | Frequency domain density | Time domain density | Frequency domain filtering granularity | Time domain filtering granularity | Frequency domain detection granularity | Time domain detection granularity |
|---|---|---|---|---|---|---|
| 1 | 4 | 4 | 2 | 1 | 2 | 1 |
| 2 | 2 | 2 | 4 | 2 | 4 | 2 |
| 3 | 1 | 1 | 8 | 4 | 8 | 4 |

(2) Manner 2

The terminal device receives second indication information from the network device, where the second indication information indicates the N groups of receiving parameters. Specifically, the network device may determine the N groups of receiving parameters, and send the second indication information to the terminal device. In a possible implementation, the second indication information may include the N groups of receiving parameters and indexes of the N port groups respectively corresponding to the N groups of receiving parameters. Further, the terminal device may determine, based on the second indication information, the N groups of receiving parameters respectively corresponding to the N port groups.

In another possible implementation, the second indication information may include the N groups of receiving parameters. In this case, a correspondence between the N port groups and the N groups of receiving parameters included in the second indication information may be pre-agreed upon by the network device and the terminal device, or may be predefined in a protocol. For example, the network device and the terminal device may pre-agree that the indexes of the N port groups are sorted based on sizes, and the sorted indexes of the port groups are in one-to-one correspondence with the N groups of receiving parameters included in the second indication information.

(3) Manner 3

The terminal device may determine the N groups of large-scale parameters respectively corresponding to the N port groups, and then determine the N groups of receiving parameters based on the N groups of large-scale parameters and a correspondence between the large-scale parameters and the receiving parameters. The correspondence between the large-scale parameters and the receiving parameters is indicated by the network device to the terminal device, or may be predefined in a protocol. For example, the large-scale parameters include the multipath delay spread and the Doppler shift. Table 7 shows an example of a correspondence between a multipath delay spread and receiving parameters in frequency domain (for example, a frequency domain filtering granularity, a frequency domain detection granularity, and a frequency domain density). Table 8 shows an example of a correspondence between a Doppler shift and receiving parameters in time domain (for example, a time domain filtering granularity, a time domain detection granularity, and a time domain density).

**Table 7: Example of a correspondence between a multipath delay spread and receiving parameters in frequency domain**

| Multipath delay spread | Frequency domain filtering granularity | Frequency domain detection granularity | Frequency domain density |
|---|---|---|---|
| <10 ns | 16 | 16 | 1 |
| 10 ns to 300 ns | 4 | 4 | 2 |
| 301 ns to 1000 ns | 2 | 2 | 3 |
| >1001 ns | 1 | 1 | 4 |

**Table 8: Example of a correspondence between a Doppler shift and receiving parameters in time domain**

| Doppler shift | Time domain precoding granularity | Time domain detection granularity | Time domain density |
|---|---|---|---|
| <28 Hz | 16 | 16 | 1 |
| 28 Hz to 740 Hz | 4 | 4 | 2 |
| 741 Hz to 1111 Hz | 2 | 2 | 3 |
| >1111 Hz | 1 | 1 | 4 |

The terminal device may determine, in a plurality of manners, the N groups of large-scale parameters respectively corresponding to the N port groups.

In a possible implementation, the terminal device may determine the N groups of large-scale parameters based on the N port groups and the correspondence between the port groups and the large-scale parameters. The correspondence between the port groups and the large-scale parameters may be indicated by the network device to the terminal device, or may be predefined in a protocol.

In another possible implementation, the network device may send configuration information 1 to the terminal device, where the configuration information 1 is for configuring a plurality of CSI-RS resources, for example, a CSI-RS resource 1, a CSI-RS resource 2, and a CSI-RS resource 3. Further, the network device may send CSI-RSs on the CSI-RS resources. Correspondingly, the terminal device may receive the CSI-RSs on the CSI-RS resources, and obtain a large-scale parameter corresponding to each CSI-RS resource through CSI-RS measurement. Optionally, the terminal device may further report CSI to the network device. For example, the CSI may include a large-scale parameter corresponding to a CSI-RS resource and a CSI-RS resource indicator (CSI-RS resource indicator, CRI). The CSI may further include other possible information such as a precoding matrix indicator, a rank indicator, a channel quality indicator, and a layer indicator. This is not limited in embodiments of this application.

The network device may further send configuration information 2 to the terminal device, where the configuration information 2 is for configuring a plurality of TCI states corresponding to a first QCL type. The first QCL type may be, for example, a QCL type A.

The network device may further send an activation command to the terminal device, where the activation command is for activating a first TCI state in the plurality of TCI states corresponding to the first QCL type, the first TCI state may correspond to a first port group, and the first TCI state indicates that there is a QCL relationship between a reference signal resource corresponding to the first port group and a target reference signal resource. The target reference signal resource may be one of the CSI-RS resource 1, the CSI-RS resource 2, and the CSI-RS resource 3. Further, the terminal device may determine, based on a large-scale parameter corresponding to the target reference signal resource, a large-scale parameter corresponding to the first port group.

A correspondence between the first TCI state and the first port group may be indicated by the network device to the terminal device, or may be predefined in a protocol. For example, the activation command may include an identifier of the first TCI state and an index of the first port group. In this case, this may be understood as that the activation command is for activating the first TCI state, and the first TCI state corresponds to the first port group.

For example, the configuration information 1 and the configuration information 2 may be carried in an RRC message, and the activation command may be carried in physical layer signaling, for example, downlink control information (downlink control information, DCI), as described above

According to the method in Embodiment 1, because the N port groups are in one-to-one correspondence with the N groups of sending parameters, the network device may use different sending parameters for different port groups; and because the N groups of port groups are in one-to-one correspondence with the N groups of receiving parameters, the terminal device may use different receiving parameters for different port groups. In this way, a problem that a bit error rate at a receiving end is high because a same solution is used for the plurality of ports is effectively avoided, to ensure normal communication between the network device and the terminal device.

## **Embodiment 2**

In Embodiment 2, a first communication parameter is a sending parameter, and a second communication parameter is a receiving parameter.

FIG. 4 is a schematic flowchart corresponding to a communication method according to an embodiment of this application. As shown in FIG. 4, the method may include the following steps.

S401: A network device sends first indication information to a terminal device, where the first indication information indicates M ports, and the M ports belong to N port groups.

Herein, for related implementation of S401, refer to S301.

S402: The terminal device sends information to the network device based on N groups of sending parameters respectively corresponding to the N port groups, for example, sends a DMRS and data, where the DMRS and the data are carried on a PUSCH.

Herein, the terminal device may determine the N groups of sending parameters in a plurality of manners. The following describes three possible manners.

(1) Manner 1

The terminal device may determine the N groups of sending parameters based on the N port groups and a correspondence between the port groups and the sending parameters. The correspondence between the port groups and the sending parameters may be indicated by the network device to the terminal device, or may be predefined in a protocol. For example, for the correspondence between the port groups and the sending parameters, refer to Table 2 in Embodiment 1.

(2) Manner 2

The terminal device receives second indication information from the network device, where the second indication information indicates the N groups of sending parameters. Specifically, the network device may determine the N groups of sending parameters, and send the second indication information to the terminal device. In a possible implementation, the second indication information may include the N groups of sending parameters and indexes of the N port groups respectively corresponding to the N groups of sending parameters. Further, the terminal device may determine, based on the second indication information, the N groups of sending parameters respectively corresponding to the N port groups.

In another possible implementation, the second indication information may include the N groups of sending parameters. In this case, a correspondence between the N port groups and the N groups of sending parameters included in the second indication information may be pre-agreed upon by the network device and the terminal device, or may be predefined in a protocol.

(3) Manner 3

The terminal device may determine N groups of large-scale parameters respectively corresponding to the N port groups, and then determine the N groups of sending parameters based on the N groups of large-scale parameters and a correspondence between the large-scale parameters and the sending parameters. The correspondence between the large-scale parameters and the sending parameters is indicated by the network device to the terminal device, or may be predefined in a protocol. For example, for the correspondence between the large-scale parameters and the sending parameters, refer to Table 4 and Table 5 in Embodiment 1. For a manner in which the terminal device determines the N groups of large-scale parameters respectively corresponding to the N port groups, refer to the descriptions in Embodiment 1.

S403: The network device receives the information from the terminal device based on N groups of receiving parameters respectively corresponding to the N port groups, for example, receives the DMRS and the data, where the DMRS and the data are carried on the PUSCH.

Herein, the network device may determine the N groups of receiving parameters in a plurality of manners. In a possible implementation, the network device may determine the N groups of receiving parameters based on the N port groups and a correspondence between the port groups and the receiving parameters. For the correspondence between the port groups and the receiving parameters, refer to Table 6 in Embodiment 1. In another possible implementation, the network device may determine the N groups of large-scale parameters respectively corresponding to the N port groups, and then determine the N groups of receiving parameters based on the N groups of large-scale parameters and a correspondence between the large-scale parameters and the receiving parameters. For the correspondence between the large-scale parameters and the receiving parameters, refer to Table 7 and Table 8 in Embodiment 1. For a manner in which the network device determines the N groups of large-scale parameters respectively corresponding to the N port groups, refer to the descriptions in Embodiment 1.

According to the method in Embodiment 2, because the N port groups are in one-to-one correspondence with the N groups of sending parameters, the terminal device may use different sending parameters for different port groups; and because the N groups of port groups are in one-to-one correspondence with the N groups of receiving parameters, the network device may use different receiving parameters for different port groups. In this way, a problem that a bit error rate at a receiving end is high because a same solution is used for a plurality of ports is effectively avoided, to ensure normal communication between the network device and the terminal device.

For the foregoing Embodiment 1 and Embodiment 2, it may be understood that:

(1) Step numbers in the flowcharts described in Embodiment 1 and Embodiment 2 are merely an example of an execution procedure, and do not constitute a limitation on an execution sequence of the steps. In embodiments of this application, there is no strict execution sequence between steps that do not have a time sequence dependency relationship with each other. Not all the steps shown in the flowcharts are mandatory steps. Some steps may be deleted from the flowcharts based on an actual requirement, or another possible step may be added to the flowcharts based on an actual requirement.

(2) The foregoing focuses on a difference between Embodiment 1 and Embodiment 2. For other content except the difference, Embodiment 1 and Embodiment 2 may be mutually referenced. In addition, in a same embodiment, different implementations or different examples may also be mutually referenced.

The foregoing mainly describes the solutions provided in embodiments of this application from a perspective of interaction between communication apparatuses. It may be understood that, to implement the foregoing functions, the network device and the terminal device may include a corresponding hardware structure and/or a software module for performing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by the hardware or the hardware driven by the computer software depends on particular applications and design constraints of the technical solutions. A person skilled in the art may use different methods to implement the described function for each particular application, but it should not be considered that the implementation goes beyond the scope of this application.

In embodiments of this application, the network device and the terminal device may be divided into functional units based on the method examples above. For example, each functional unit may be obtained through division based on each corresponding function, or two or more functions may be integrated into one unit. The integrated unit above may be implemented in a form of hardware, or may be implemented in a form of a software functional unit.

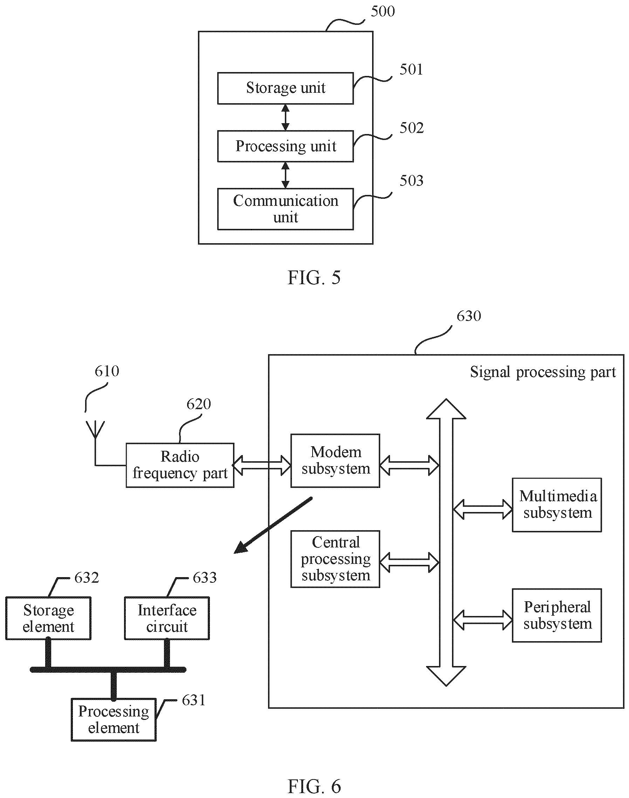

When an integrated unit is used, FIG. 5 is a block diagram of a possible example of an apparatus according to an embodiment of this application. As shown in FIG. 5, the apparatus 500 includes a processing unit 502 and a communication unit 503. The processing unit 502 is configured to control and manage actions of the apparatus 500. The communication unit 503 is configured to support communication between the apparatus 500 and another device.

Optionally, the communication unit 503 is also referred to as a transceiver unit, and may include a receiving unit and/or a sending unit, which are respectively configured to perform a receiving operation and a sending operation. The apparatus 500 may further include a storage unit 501, configured to store program code and/or data of the apparatus 500.

The apparatus 500 may be the terminal device in the foregoing embodiments. The processing unit 502 may support the apparatus 500 in performing actions of the terminal device in the foregoing method examples. Alternatively, the processing unit 502 mainly performs internal actions of the terminal device in the method examples, and the communication unit 503 may support the communication between the apparatus 500 and another device.

For example, in an embodiment, the communication unit 503 is configured to: receive first indication information from a network device, where the first indication information indicates M ports, the M ports belong to N port groups, the N port groups are in one-to-one correspondence with N groups of first communication parameters, and both M and N are integers greater than 1; and communicate with the network device based on the N groups of first communication parameters.

The apparatus 500 may be the network device in the foregoing embodiments. The processing unit 502 may support the apparatus 500 in performing actions of the network device in the foregoing method examples. Alternatively, the processing unit 502 mainly performs internal actions of the network device in the method examples, and the communication unit 503 may support the communication between the apparatus 500 and another device.

For example, in an embodiment, the communication unit 503 is configured to: send first indication information to the terminal device, where the first indication information indicates M ports, the M ports belong to N port groups, the N port groups are in one-to-one correspondence with N groups of second communication parameters, and both M and N are integers greater than 1; and communicate with the terminal device based on the N groups of second communication parameters.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. In an implementation process, operations in the foregoing methods or the foregoing units may be implemented by a hardware integrated logic circuit in the processor element or may be implemented in a form in which the processing element invokes software.

In an example, the unit in any one of the foregoing apparatuses may be one or more integrated circuits configured to implement the foregoing method, for example, one or more application-specific integrated circuits (application-specific integrated circuits, ASICs), or one or more microprocessors (digital signal processors, DSPs), or one or more field programmable gate arrays (field programmable gate arrays, FPGAs), or a combination of at least two of these integrated circuit forms. In another example, when the unit in the apparatus may be implemented in a form in which a processing element schedules a program, the processing element may be a processor, for example, a general-purpose central processing unit (central processing unit, CPU) or another processor that can invoke the program. In still another example, the units may be integrated and implemented in a form of a system-on-a-chip (system-on-a-chip, SoC).

The foregoing unit for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit for sending is an interface circuit of the apparatus, and is configured to send a signal to another apparatus. For example, when the apparatus is implemented in the manner of the chip, the sending unit is an interface circuit that is of the chip and that is configured to send a signal to another chip or apparatus.

FIG. 6 is a diagram of a structure of a terminal device according to an embodiment of this application. The terminal device may be used in the communication system shown in FIG. 1, to implement operations of the terminal device in the foregoing embodiments. As shown in FIG. 6, the terminal device includes an antenna 610, a radio frequency part 620, and a signal processing part 630. The antenna 610 is connected to the radio frequency part 620. In a downlink direction, the radio frequency part 620 receives, through the antenna 610, information sent by a network device, and sends, to the signal processing part 630 for processing, the information sent by the network device. In an uplink direction, the signal processing part 630 processes information of the terminal device, and sends the information to the radio frequency part 620. The radio frequency part 620 processes the information of the terminal device, and then sends processed information to the network device through the antenna 610.

The signal processing part 630 may include a modem subsystem, configured to process data at each communication protocol layer. The signal processing part 630 may further include a central processing subsystem, configured to process an operating system and an application layer of the terminal device. In addition, the signal processing part 630 may further include another subsystem, for example, a multimedia subsystem or a peripheral subsystem. The multimedia subsystem is configured to control a camera, a screen display, and the like of the terminal device. The peripheral subsystem is configured to connect to another device. The modem subsystem may be a separately disposed chip.

The modem subsystem may include one or more processing elements 631, for example, include one main control CPU and another integrated circuit. In addition, the modem subsystem may further include a storage element 632 and an interface circuit 633. The storage element 632 is configured to store data and a program. However, a program for performing the methods performed by the terminal device in the foregoing methods may not be stored in the storage element 632, but is stored in a memory outside the modem subsystem, and is loaded and used by the modem subsystem when to be used. The interface circuit 633 is configured to communicate with another subsystem.

The modem subsystem may be implemented by a chip. The chip includes at least one processing element and an interface circuit. The processing element is configured to perform the steps of any method performed by the terminal device. The interface circuit is configured to communicate with another apparatus. In an implementation, units of the terminal device that implement the steps in the foregoing methods may be implemented by a program scheduled by a processing element. For example, the apparatus used for the terminal device includes a processing element and a storage element. The processing element invokes a program stored in the storage element, to perform the methods performed by the terminal device in the foregoing method embodiments. The storage element may be a storage element located on a same chip as the processing element, namely, an on-chip storage element.

In another implementation, the program for performing the methods performed by the terminal device in the foregoing methods may be in a storage element located on a different chip from the processing element, namely, an off-chip storage element. In this case, the processing element invokes or loads the program from the off-chip storage element to an on-chip storage element, to invoke and perform the methods performed by the terminal device in the foregoing method embodiments.

In still another implementation, units of the terminal device that implement the steps in the foregoing methods may be configured as one or more processing elements. The processing elements are disposed in the modem subsystem. The processing element herein may be an integrated circuit, for example, one or more ASICs, one or more DSPs, one or more FPGAs, or a combination of the types of integrated circuits. These integrated circuits may be integrated together to form a chip.

Units of the terminal device that implement the steps in the foregoing methods may be integrated together, and implemented in a form of SoC. The SoC chip is configured to implement the foregoing methods. At least one processing element and a storage element may be integrated into the chip, and the processing element invokes a program stored in the storage element to implement the foregoing method performed by the terminal device. Alternatively, at least one integrated circuit may be integrated into the chip, to implement the foregoing method performed by the terminal device. Alternatively, with reference to the foregoing implementations, functions of some units may be implemented by a program invoked by the processing element, and functions of some units are implemented by the integrated circuit.

It can be learned that the foregoing apparatus used for the terminal device may include at least one processing element and an interface circuit. The at least one processing element is configured to perform any one of the methods that are performed by the terminal device and that are provided in the foregoing method embodiments. The processing element may perform some or all steps, performed by the terminal device, in a first manner, to be specific, by invoking the program stored in the storage element; or may perform some or all steps, performed by the terminal device, in a second manner, to be specific, by using a hardware integrated logical circuit in the processor element in combination with instructions; or may certainly perform, in a combination of the first manner and the second manner, some or all steps performed by the terminal device.

The processing element herein is the same as that described above, and may be implemented by a processor. A function of the processing element may be the same as a function of the processing unit described in FIG. 5. For example, the processing element may be a general-purpose processor, for example, a CPU, or may be one or more integrated circuits configured to implement the foregoing methods, for example, one or more ASICs, one or more microprocessors DSPs, or one or more FPGAs, or a combination of at least two of the integrated circuit forms. The storage element may be implemented by a memory, and a function of the storage element may be the same as a function of the storage unit described in FIG. 5. The storage element may be one memory, or an umbrella term of a plurality of memories.

The terminal device shown in FIG. 6 can implement all processes related to the terminal device in the foregoing method embodiments. Operations and/or functions of the modules in the terminal device shown in FIG. 6 are intended to implement the corresponding procedures in the foregoing method embodiments. For details, refer to the descriptions in the foregoing method embodiments. To avoid repetition, detailed descriptions are properly omitted herein.

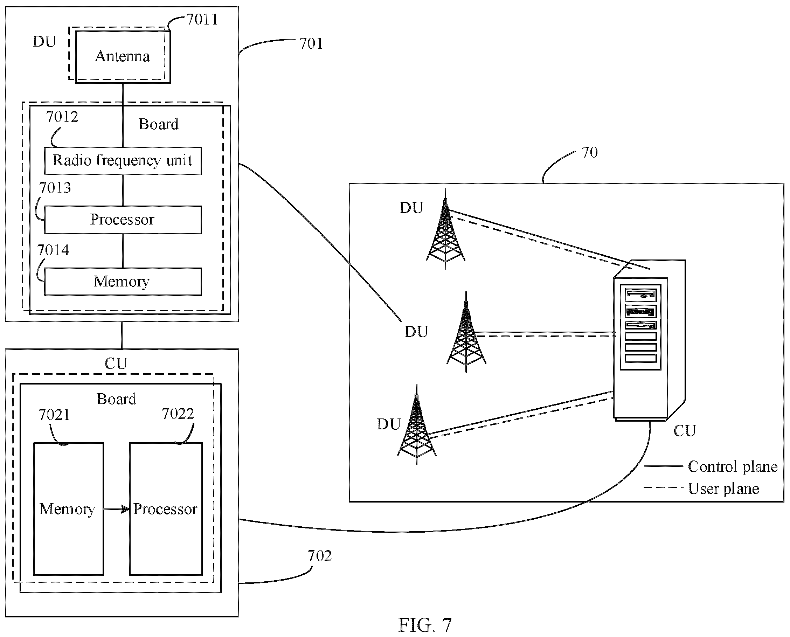

FIG. 7 is a diagram of a structure of a network device according to an embodiment of this application. The network device (or a base station) may be used in the communication system shown in FIG. 1, to perform a function of the network device in the foregoing method embodiments. As shown in FIG. 7, the network device 70 may include one or more DUs 701 and one or more CUs 702. The DU 701 may include at least one antenna 7011, at least one radio frequency unit 7012, at least one processor 7013, and at least one memory 7014. The DU 701 part is mainly configured to receive and send a radio frequency signal, perform conversion between the radio frequency signal and a baseband signal, and perform some baseband processing. The CU 702 may include at least one processor 7022 and at least one memory 7021.

The CU 702 is mainly configured to: perform baseband processing, control the network device, and the like. The DU 701 and the CU 702 may be physically disposed together, or may be physically disposed separately, in other words, may be a distributed base station. The CU 702 is a control center of the network device, may also be referred to as a processing unit, and is mainly configured to complete a baseband processing function. For example, the CU 702 may be configured to control the network device to perform the operation procedures related to the network device in the foregoing method embodiments.

In addition, optionally, the network device 70 may include one or more radio frequency units, one or more DUs, and one or more CUs. The DU may include at least one processor 7013 and at least one memory 7014, the radio frequency unit may include at least one antenna 7011 and at least one radio frequency unit 7012, and the CU may include at least one processor 7022 and at least one memory 7021.

In an instance, the CU 702 may include one or more boards, and a plurality of boards may jointly support a radio access network (for example, a 5G network, a 6G network, or another network) of a single access indication, or may separately support radio access networks (such as an LTE network, a 5G network, a 6G network, or another network) of different access standards. The memory 7021 and the processor 7022 may serve one or more boards. In other words, a memory and a processor may be disposed on each board. Alternatively, a plurality of boards may share a same memory and a same processor. In addition, a necessary circuit may further be disposed on each board. The DU 701 may include one or more boards, and a plurality of boards may jointly support a radio access network (for example, a 5G network, a 6G network, or another network) of a single access indication, or may separately support radio access networks (such as an LTE network, a 5G network, a 6G network, or another network) of different access standards. The memory 7014 and the processor 7013 may serve one or more boards. In other words, a memory and a processor may be disposed on each board. Alternatively, a plurality of boards may share a same memory and a same processor. In addition, a necessary circuit may further be disposed on each board.

The network device shown in FIG. 7 can implement processes related to the network device in the foregoing method embodiments. Operations and/or functions of the modules in the network device shown in FIG. 7 are intended to implement corresponding procedures in the foregoing method embodiments. For details, refer to the descriptions in the foregoing method embodiments. To avoid repetition, detailed descriptions are properly omitted herein.

The terms "system" and "network" may be used interchangeably in embodiments of this application. "At least one" means one or more, and "a plurality of" means two or more. "And/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are for distinguishing between a plurality of objects, and are not for limiting a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be for implementing each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope defined by the following claims of this application and their equivalent technologies.

**Claims**

1. A communication method, wherein the method comprises:

receiving first indication information from a network device, wherein the first indication information indicates M ports, the M ports belong to N port groups, the N port groups are in one-to-one correspondence with N groups of first communication parameters, and both M and N are integers greater than 1; and
communicating with the network device based on the N groups of first communication parameters.

2. The method according to claim 1, wherein the method further comprises:

determining the N groups of first communication parameters based on the N port groups and a correspondence between the port groups and the first communication parameters; or
receiving second indication information from the network device, wherein the second indication information indicates the N groups of first communication parameters.

3. The method according to claim 2, wherein the correspondence between the port groups and the first communication parameters is indicated by the network device, or is predefined.

4. The method according to claim 1, wherein the method further comprises:

determining N groups of large-scale parameters respectively corresponding to the N port groups; and
determining the N groups of first communication parameters based on the N groups of large-scale parameters and a correspondence between the large-scale parameters and the first communication parameters.

5. The method according to claim 4, wherein the correspondence between the large-scale parameters and the first communication parameters is indicated by the network device, or is predefined.

6. The method according to claim 4 or 5, wherein the N port groups comprise a first port group; and determining the N groups of large-scale parameters corresponding to the first port group comprises:

receiving an activation command from the network device, wherein the activation command is for activating a first transmission configuration indicator TCI state in a plurality of TCI states corresponding to a first quasi-co-location QCL type, and the first TCI state indicates that there is a QCL relationship between a reference signal resource corresponding to the first port group and a target reference signal resource; and
determining, based on a large-scale parameter corresponding to the target reference signal resource, the large-scale parameters corresponding to the first port group.

7. The method according to claim 6, wherein a correspondence between the first TCI state and the first port group is indicated by the network device, or is predefined.

8. The method according to claim 6 or 7, wherein the method further comprises:
receiving configuration information from the network device, wherein the configuration information is for configuring the plurality of TCI states.

9. The method according to any one of claims 1 to 8, wherein the N port groups comprise the first port group, and first communication parameters corresponding to the first port group comprise a receiving parameter in frequency domain and/or a receiving parameter in time domain.

10. The method according to claim 9, wherein the receiving parameter in frequency domain comprises at least one of the following:

 a first parameter, wherein the first parameter indicates a frequency domain density of a reference signal corresponding to the first port group;
 a second parameter, wherein the second parameter indicates a frequency domain filtering granularity and/or a frequency domain filtering coefficient corresponding to the first port group; and
 a third parameter, wherein the third parameter indicates a frequency domain detection granularity and/or a frequency domain detection coefficient corresponding to the first port group.

11. The method according to claim 9 or 10, wherein the receiving parameter in time domain comprises at least one of the following:

 a fourth parameter, wherein the fourth parameter indicates a time domain density of the reference signal corresponding to the first port group;
 a fifth parameter, wherein the fifth parameter indicates a time domain filtering granularity and/or a time domain filtering coefficient corresponding to the first port group; and
 a sixth parameter, wherein the sixth parameter indicates a time domain detection granularity and/or a time domain detection coefficient corresponding to the first port group.

12. The method according to any one of claims 1 to 5, wherein the N port groups comprise a first port group, and first communication parameters corresponding to the first port group comprise a sending parameter in frequency domain and/or a sending parameter in time domain.

13. The method according to claim 12, wherein the sending parameter in frequency domain comprises at least one of the following:

 a seventh parameter, wherein the seventh parameter indicates a frequency domain density of a reference signal corresponding to the first port group; and
 an eighth parameter, wherein the eighth parameter indicates a frequency domain precoding granularity corresponding to the first port group.

14. The method according to claim 12 or 13, wherein the sending parameter in time domain comprises at least one of the following:

 a ninth parameter, wherein the ninth parameter indicates a time domain density of the reference signal corresponding to the first port group; and
 a tenth parameter, wherein the tenth parameter indicates a time domain precoding granularity corresponding to the first port group.

15. A communication method, wherein the method comprises:

 sending first indication information to a terminal device, wherein the first indication information indicates M ports, the M ports belong to N port groups, the N port groups are in one-to-one correspondence with N groups of second communication parameters, and both M and N are integers greater than 1; and
 communicating with the terminal device based on the N groups of second communication parameters.

16. The method according to claim 15, wherein the method further comprises:
 determining the N groups of second communication parameters based on the N port groups and a correspondence between the port groups and the second communication parameters.

17. The method according to claim 16, wherein the correspondence between the port groups and the second communication parameters is predefined.

18. The method according to claim 15, wherein the method further comprises:

 determining N groups of large-scale parameters respectively corresponding to the N port groups; and
 determining the N groups of second communication parameters based on the N groups of large-scale parameters and a correspondence between the large-scale parameters and the second communication parameters.

19. The method according to claim 18, wherein the correspondence between the large-scale parameters and the second communication parameters is predefined.

20. The method according to any one of claims 15 to 19, wherein the N port groups are in one-to-one correspondence with N groups of first communication parameters; and
the method further comprises:
sending second indication information to the terminal device, wherein the second indication information indicates the N groups of first communication parameters, and the N groups of first communication parameters are for communication between the terminal device and a network device.

21. The method according to any one of claims 15 to 20, wherein the N port groups comprise a first port group; and
the method further comprises:
sending an activation command to the terminal device, wherein the activation command is for activating a first TCI state in a plurality of TCI states corresponding to a first QCL type, and the first TCI state indicates that there is a QCL relationship between a reference signal resource corresponding to the first port group and a target reference signal resource.

22. The method according to claim 21, wherein a correspondence between the first TCI state and the first port group is indicated by the network device, or is predefined.

23. The method according to claim 21 or 22, wherein the method further comprises:
sending configuration information to the terminal device, wherein the configuration information is for configuring the plurality of TCI states.

24. The method according to any one of claims 15 to 20, wherein the N port groups comprise a first port group, and second communication parameters corresponding to the first port group comprise a receiving parameter in frequency domain and/or a receiving parameter in time domain.

25. The method according to claim 24, wherein the receiving parameter in frequency domain comprises at least one of the following:

a first parameter, wherein the first parameter indicates a frequency domain density of a reference signal corresponding to the first port group;
a second parameter, wherein the second parameter indicates a frequency domain filtering granularity and/or a frequency domain filtering coefficient corresponding to the first port group; and
a third parameter, wherein the third parameter indicates a frequency domain detection granularity and/or a frequency domain detection coefficient corresponding to the first port group.

26. The method according to claim 24 or 25, wherein the receiving parameter in time domain comprises at least one of the following:

a fourth parameter, wherein the fourth parameter indicates a time domain density of the reference signal corresponding to the first port group;
a fifth parameter, wherein the fifth parameter indicates a time domain filtering granularity and/or a time domain filtering coefficient corresponding to the first port group; and
a sixth parameter, wherein the sixth parameter indicates a time domain detection granularity and/or a time domain detection coefficient corresponding to the first port group.

27. The method according to any one of claims 15 to 23, wherein the N port groups comprise the first port group, and communication parameters corresponding to the first port group comprise a sending parameter in frequency domain and/or a sending parameter in time domain.

28. The method according to claim 27, wherein the sending parameter in frequency domain comprises at least one of the following:

a seventh parameter, wherein the seventh parameter indicates a frequency domain density of a reference signal corresponding to the first port group; and

an eighth parameter, wherein the eighth parameter indicates a frequency domain precoding granularity corresponding to the first port group.

29. The method according to claim 27 or 28, wherein the sending parameter in time domain comprises at least one of the following:

a ninth parameter, wherein the ninth parameter indicates a time domain density of the reference signal corresponding to the first port group; and

a tenth parameter, wherein the tenth parameter indicates a time domain precoding granularity corresponding to the first port group.

30. A communication apparatus, comprising a module configured to perform the method according to any one of claims 1 to 29.

31. A communication apparatus, comprising a processor, wherein the processor is coupled to a memory, and the memory stores a computer program; and the processor is configured to invoke the computer program in the memory, to cause the communication apparatus to perform the method according to any one of claims 1 to 29.

32. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 29 via a logic circuit or by executing code instructions.

33. A computer-readable storage medium, wherein the storage medium stores a computer program or instructions; and when the computer program or the instructions are executed by a computer, the method according to any one of claims 1 to 29 is implemented.

34. A computer program product, wherein when a computer reads and executes the computer program product, the computer is caused to perform the method according to any one of claims 1 to 29.

FIG. 1

Path 3

Path 1

Transmitting
end

Receiving
end

Path 2

(a)

Signal
strength

Time

t0   t1   t2      t3

(b)

FIG. 2

```
┌──────────┐                                    ┌──────────┐
│ Terminal │                                    │ Network  │
│ device   │                                    │ device   │
└────┬─────┘                                    └────┬─────┘
     │                                               │
     │   S301: First indication information, indicating M
     │   ports, where the M ports belong to N port groups
     │◄──────────────────────────────────────────────│
     │                                               │
     │   S302: Send information to the terminal device
     │       based on N groups of sending parameters
     │   respectively corresponding to the N port groups
     │◄──────────────────────────────────────────────│
     │                                               │
┌────┴───────────────────────────┐                   │
│ S303: Receive the information   │                   │
│ from the network device based on│                   │
│ N groups of receiving parameters│                   │
│ respectively corresponding to the│                  │
│ N port groups                   │                   │
└────┬───────────────────────────┘                   │
     │                                               │
```

FIG. 3

```
┌──────────┐                                    ┌──────────┐
│ Terminal │                                    │ Network  │
│ device   │                                    │ device   │
└────┬─────┘                                    └────┬─────┘
     │                                               │
     │   S401: First indication information, indicating M
     │   ports, where the M ports belong to N port groups
     │◄──────────────────────────────────────────────│
     │                                               │
     │   S402: Send information to the network device
     │       based on N groups of sending parameters
     │   respectively corresponding to the N port groups
     │◄──────────────────────────────────────────────│
     │                                               │
     │                        ┌──────────────────────┴───────┐
     │                        │ S403: Receive the information │
     │                        │ from the terminal device based on│
     │                        │ N groups of receiving parameters│
     │                        │ respectively corresponding to the│
     │                        │ N port groups                 │
     │                        └──────────────────────┬───────┘
     │                                               │
```

FIG. 4

500

Storage unit 501

Processing unit 502

Communication unit 503

FIG. 5

630

610

620

Signal processing part

Radio frequency part

Modem subsystem

Multimedia subsystem

Central processing subsystem

Peripheral subsystem

632

Storage element

633

Interface circuit

631

Processing element

FIG. 6

FIG. 7

## INTERNATIONAL SEARCH REPORT

| International application No. |
| --- |
| **PCT/CN2023/093903** |

| | |
| --- | --- |
| **A.** | **CLASSIFICATION OF SUBJECT MATTER** |
| | H04L5/00(2006.01)i |

According to International Patent Classification (IPC) or to both national classification and IPC

| | |
| --- | --- |
| **B.** | **FIELDS SEARCHED** |

Minimum documentation searched (classification system followed by classification symbols)
   IPC: H04W, H04L, H04B

Documentation searched other than minimum documentation to the extent that such documents are included in the fields searched

Electronic data base consulted during the international search (name of data base and, where practicable, search terms used)
   CNTXT, ENTXTC, 3GPP: 终端设备, 网络设备, 指示, 端口组, 参数; terminal device, network device, indication, port group, parameter

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 108075868 A (VIVO COMMUNICATION TECHNOLOGY CO., LTD.) 25 May 2018 (2018-05-25) <br> description, paragraphs 40-130 | 1-34 |
| A | CN 110248368 A (SHANGHAI LANGBO COMMUNICATION TECHNOLOGY CO., LTD.) 17 September 2019 (2019-09-17) <br> entire document | 1-34 |
| A | WO 2021189216 A1 (HUAWEI TECHNOLOGIES CO., LTD.) 30 September 2021 (2021-09-30) <br> entire document | 1-34 |
| A | SAMSUNG. "Issues on PTRS" <br> *3GPP TSG RAN WG1 Meeting #92b R1-1804367*, 20 April 2018 (2018-04-20), <br> entire document | 1-34 |

☐ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 July 2023** | **01 August 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/093903**

| Patent document cited in search report | | | Publication date (day/month/year) | Patent family member(s) | Publication date (day/month/year) |
|---|---|---|---|---|---|
| CN | 108075868 | A | 25 May 2018 | None | |
| CN | 110248368 | A | 17 September 2019 | None | |
| WO | 2021189216 | A1 | 30 September 2021 | None | |

Form PCT/ISA/210 (patent family annex) (July 2022)

**REFERENCES CITED IN THE DESCRIPTION**

**Patent documents cited in the description**

- CN 202210554234